# EUROPÄISCHE PATENTSCHRIFT

(11) **EP 2 160 709 B1**
(45) Veröffentlichungstag und Bekanntmachung des Hinweises auf die Patenterteilung: **27.10.2010**
(21) Anmeldenummer: 09728182.8
(22) Anmeldetag: 16.03.2009
(51) Int. Cl.: G06K 19/00

(54) **VERFAHREN ZUM SPEICHERN UND AUSLESEN VON DATEN**
METHOD FOR STORING AND READING DATA
PROCÉDÉ POUR STOCKER ET LIRE DES DONNÉES

(30) Priorität: 02.04.2008 DE 102008017168
(43) Veröffentlichungstag der Anmeldung: 10.03.2010
(73) Patentinhaber: Crossmedia Solution Gmbh & Co. Kg, 86492 Egling (DE)
(72) Erfinder: GREIM, Paul, 85356 Neusäß (DE)
(74) Vertreter: Hentrich, Swen
(86) Internationale Anmeldenummer: PCT/DE2009/075013
(87) Internationale Veröffentlichungsnummer: WO 2009/121356

(56) Entgegenhaltungen:
- EP-A- 1 876 552
- US-A- 5 862 255

## Beschreibung

Die vorliegende Erfindung betrifft ein Verfahren zum Speichern von Daten gemäß dem Oberbegriff des Patentanspruchs 1 und ein Verfahren zum Auslesen von gespeicherten Daten gemäß dem Oberbegriff des Patentanspruchs 17.

Auf bedruckten Medien wie beispielsweise Büchern, Zeitschriften, Prospekten in Form von maschinenlesbaren Punktmustem gespeicherte (gedruckte) Daten können beispielsweise dazu verwendet werden, den Leser eines gedruckten Mediums mit Zusatzinformationen zu versorgen. Diese Zusatzinformationen können beispielsweise auf bedruckbaren Medien nicht darstellbare Informationen wie beispielsweise Filme oder Musik sein, oder umfangreiche weitere Informationen sein, die zwar prinzipiell auf dem bedruckten Medium darstellbar wären, aber aufgrund ihres Umfanges nicht in das bedruckte Medium aufgenommen werden können.

Das Punktmuster kann die Zusatzinformation selbst oder einen Link zu der anderswo, beispielsweise auf einer CD oder einem Computer gespeicherten oder über das Internet abrufbaren Zusatzinformation repräsentieren.

Ein möglicher praktischer Anwendungsfall besteht darin, dass in einem Lexikon benachbart zu einem Artikel über einen Komponisten ein Punktmuster gedruckt wird, das einen Link zu einem auf einer CD gespeicherten Musikstück des Komponenten repräsentiert Wenn dem Benutzer des Lexikon die darin im Klartext wiedergegebene Information über den Komponisten nicht ausreicht, kann er sich über seinen Computer zusätlich Informationen beschaffen, beispielsweise das erwähnte Musikstück wiedergeben lassen. Zu diesem Zweck schließt er an seinen Computer eine optische Punktmuster-Lesevorrichtung an, mit Hilfe dessen das neben dem Komponistenartikel abgedruckt Punktmuster erfasst und an den Computer weitergeleitet wird. Der Computer bzw. eine darauf installierte spezielle Software decodiert das Punktmuster und startet abhängig vom Inhalt der decodierten Daten automatisch weitere Aktionen wie beispielsweise das Abspielen des Musikstücks.

Ein weiterer möglicher praktischer Anwendungsfall ist ein Katalog eines Reisebüros. Würde man in einem solchen Katalog alle vom Reisebüro angebotenen Reisen ausführlich in allen Einzelheiten in den Katalog aufnehmen, entstünde ein Katalog, der so groß und so teuer in der Herstellung ist, dass er nicht mehr zur Verteilung an die Allgemeinheit geeignet ist. Hinzu kommt, dass ein sdcher Katalog aufgrund von veränderten Preisen, neu ins Angebot aufgenommenen Reisen, nicht mehr angebotenen Reisen, der nicht mehr aktuellen Reisetermine etc. sehr schnell veraltet wäre und in sehr kurzen zeitlichen Abständen aktualisierte Neuauflagen gedruckt werden müssten. Dies alles lässt sich vermeiden, wenn in dem Katalog nur die sich nicht oder selten ändernden Basisinformationen enthalten sind, und die ausführlichere Beschreibung der jeweiligen Reisen sowie die sich schnell verändernden Angaben wie Reisepreis, Reisetermine, etc. über einen durch ein Punktmuster repräsentierten Internet-Link beschafft werden können. Der Leser des Prospekts kann sich zunächst aus dem Katalog die für ihn in Frage kommenden Reisen aussuchen und sich anschließend zusätzliche Informationen aus dem Internet herunterladen und gegebenenfalls sogar eine Buchung übers Internet vornehmen. Zu diesem Zweck schließt er an seinen Computer eine optische Punktmuster-Lesevorrichtung an, mit Hilfe dessen das neben dem jeweiligen Reiseangebot abgedruckte Punktmuster erfasst und an den Computer weitergeleitet wird. Der Computer bzw. eine darauf installierte spezielle Software decodiert das Punktmuster und startet abhängig vom Inhalt der decodierten Daten automatisch weitere Aktionen wie beispielsweise das Herunterladen und Anzeigen der gewünschten Zusatzinformationen aus dem Internet.

Die Größe und die Anzahl der Punkte des Punktmusters sind vorzugsweise sehr klein, so dass sie auf dem gedruckten Medium nicht oder zumindest möglichst wenig störend in Erscheinung treten. Damit das Punktmuster möglichst wenig Platz auf dem gedruckten Medium beansprucht und eine kleine und billige Punktmuster-Lesevorrichtung zum Einsatz kommen kann, sollten die Punkte des Punktmusters darüber hinaus sehr geringe gegenseitige Abstände aufweisen. Trotz der möglichst wenigen und möglichst kleinen Punkte und deren geringen Abstände muss es jedoch zuverlässig möglich sein, das Punktmuster fehlerfrei zu drucken, zu erfassen und zu decodieren, wobei dies vorzugsweise auch bei Vorliegen von nicht optimalen Bedingungen gilt, beispielsweise wenn die Größe, die Abstände, und/oder die Relativlage der Punkte zueinander aufgrund von Problemen beim Druck von den Sollwerten abweichen oder variieren, oder wenn das Punktmuster aufgrund einer Wölbung des bedruckten Mediums und/oder einer nicht optimalen Stellung oder Ausrichtung der Punktmuster-Lesevorrichtung verzerrt erfasst wird.

Ein Verfahren gemäss dem Oberbegriff des Patentanspruchs 1 ist beispielsweise aus der EP 03 710 388 (EP-A1-1605395) und EP-A1-1876552 bekannt. Die in diesen Dokumenten beschriebenen Verfahren erfüllen jedoch nicht alle der vorstehend genannten Voraussetzungen für einen auch unter ungünstigen Bedingungen zuverlässig fehlerfreien Einsatz dieses Verfahrens.

Abhilfe schafft auch nicht das in der DE 102 55 926 A1 beschriebene Verfahren, bei welchen die zu speichernden Daten in Form eines Strichmusters gespeichert werden.

Die notwendige Präzision in der Positionierung der Punktmuster für ein reproduzierbares Auslesen der Daten erfordert bei den herkömmlichen Speicher- und Leseverfahren die Verwendung von Offsetdruckverfahren mit festen Druckvorlagen. Digitaldruckverfahren wie z. B. Laserdruckverfahren oder Tintenstrahldruckverfahren können nicht die gewünschte Präzision in der Positionierung bzw. Auflösung sicherstellen, da bei Tintenstrahldrudcverfahren selbst die kleinsten Tintentropfen der neuesten Generation auf den Druckmedien noch eine zu große Ausdehnung der Druckpunkte bewirken und da bei Laserdruckverfahren aufgrund der elektrostatischen Abstoßung der Partikel die Druckpunkte eine zu große Ausdehnung aufweisen.

Der vorliegenden Erfindung liegt daher die Aufgabe zugrunde, die bekannten Verfahren zum Speichern von Daten in Form eines eine Vielzahl von Punkten umfassenden Punktmusters auf die Oberfläche eines bedruckbaren Mediums, sowie die Verfahren zum Auslesen von derart gespeicherten Daten dahingehend zu verbessern, dass auch durch ein Digitaldruckverfahren auf ein bedruckbares Medium gedruckte Punktmuster zuverlässig fehlerfrei erfasst und decodiert werden können.

Bei einem Verfahren zum Speichern von Daten, bei welchem die zu speichernden Daten unter Verwendung einer Druckvorrichtung in Form eines eine Vielzahl von Punkten umfassenden Punktmusters auf die Oberfläche eines bedruckbaren Mediums gedruckt werden, wobei das Punktmuster mindestens einen eine bestimmte Fläche auf dem bedruckbaren Medium belegenden Punktmuster-Block umfasst, und wobei die Fläche, die der mindestens eine Punktmuster-Block auf dem zu bedruckenden Medium belegt, eine Vielzahl von nebeneinander und/oder übereinander angeordneten Teilflächen gleicher Größe enthält, in welchen jeweils ein einen Teil der zu speichernden Daten repräsentierendes Punktmuster gedruckt ist, wird diese Aufgabe dadurch gelöst, dass jede Teilfläche eines von mehreren verschiedenen Grundpunktmustem enthält, dass jedes der mehreren Grundpunktmuster aus zwei Punkten besteht, die in Bezug auf einen virtuellen Bezugspunkt innerhalb der jeweiligen Teilfläche punktsymmetrisch angeordnet sind, und dass die Grundpunktmuster mindestens eine der folgenden Eigenschaften aufweisen: sie unterscheiden sich hinsichtlich des Winkels der virtuellen Verbindungslinie zwischen den beiden Punkten des jeweiligen Grundpunktmusters in Bezug auf eine virtuelle Bezugslinie und / oder sie weisen einen unterschiedlichen Punktabstand auf. Dieses Verfahren weist den Vorteil einer erhöhten Toleranz gegenüber Fehlern auf.

Als vorteilhaft hat es sich erwiesen, wenn das Punktmuster unter Verwendung einer Farbe gedruckt wird, die Infrarotlicht, insbesondere Infrarotlicht mit einer Wellenlänge im Bereich von 900 nm bis 980 nm absorbiert. Bevorzugt ist bei diesen Druckverfahren, wenn die mehreren verschiedenen Grundpunktmuster aus einer der Gruppen ausgewählt werden: mindestens drei verschiedene Grundpunktmuster umfassend, bis zu acht verschiedene Grundpunktmuster umfassend oder vier verschiedene Grundpunktmuster umfassend. Als günstig hat es sich erwiesen, wenn sich die mehreren verschiedenen Grundpunktmuster nur hinsichtlich des Winkels der virtuellen Verbindungslinie zwischen den beiden Punkten des jeweiligen Grundpunktmusters in Bezug auf eine virtuelle Bezugslinie unterscheiden. Insbesondere können die gegenseitigen Abstände zwischen den zwei Punkten eines jeden Grundpunktmusters bei allen Grundpunktmustem gleich groß sind. Bei einem bevorzugten Ausführungsbeispiel ist die von jedem Punktmuster-Block auf dem bedruckbaren Medium belegte Fläche eine quadratische Fläche. Als vorteilhaft hat es sich erwiesen, wenn das Punktmuster mehrere Punktmuster-Blöcke umfasst, die mehreren Punktmuster-Blöcke ohne Zwischenraum aneinandergrenzend nebeneinander und/oder übereinander gedruckt werden. Wenn das Punktmuster mehrere Punktmuster-Blöcke umfasst, können die mehreren Punktmuster-Blöcke zumindest teilweise identische Punktmuster enthalten. Bei einem bevorzugten Ausführungsbeispiel der vorliegenden Erfindung sind die jeweils ein Grundpunktmuster enthaltenden Teilflächen des mindestens einen Punkümuster-Blocks quadratische Flächen. Weiterhin kann der virtuelle Bezugspunkt der virtuelle Mittelpunkt der das jeweilige Grundpunktmuster enthaltenden Teilfläche sein. Als günstig hat es sich erwiesen, wenn in eine bestimmte Teilfläche eines jeden Punktmuster-Blocks ein aus mehreren Punkten bestehendes Referenzpunktmuster gedruckt wird. Außerdem kann die das Referenzpunktmuster enthaltende Teilfläche zusätzlich auch eines der Grundpunktmuster enthalten. Als vorteilhaft hat es sich erwiesen, wenn die das Referenzpunktmuster enthaltende Teilfläche nur bestimmte Grundpunktmuster enthält. Besonders bevorzugt werden die Punkte des Referenzpunktmusters an Stellen innerhalb der Teiffläche vorgesehen, an welchen auch dann, wenn die das Referenzpunktmuster enthaltende Teiffläche auch ein Grundpunktmuster enthäft, kein Punkt eines der Grundpunktmuster liegen kann. Bei einem vorteilhaften Ausführungsbeispiel der vorliegenden Erfindung besteht das Referenzpunktmuster aus drei Punkten, wobei einer der Punkte in der Mitte der das Referenzpunktmuster enthaltenden Teilfläche liegt, und die beiden anderen Punkte nebeneinander in dem darunter liegenden Bereich der Teilfläche liegen, und wobei die nicht gedruckte virtuelle Verbindungslinie zwischen den beiden unteren Punkten des Referenzpunktmusters einen horizontalen Verlauf aufweist Weiterhin kann der Abstand zwischen den zwei unteren Punkten des Referenzpunktmusters derart gewählt ist, dass er mindestens eine der folgenden Bedingungen erfüllt: a) er ist größer als der Abstand zwischen den zwei Punkten eines jeden Grundpunktmusters, b) er beträgt 70 % des Abstandes der virtuellen Mittelpunkte von zwei benachbart nebeneinander oder übereinander angeordneten Teilflächen. Als günstig hat es sich erwiesen, wenn der Abstand zwischen der nicht gedruckten virtuellen Verbindungslinie zwischen den zwei unteren Punkten des Referenzpunktmusters vom oberen Punkt des Referenzpunktmusters derart gewählt ist, dass er mindestens eine der folgenden Bedingungen erfüllt: a) er ist kleiner als der Abstand zwischen den zwei unteren Punkten des Referenzpunktmusters, b) er ist kleiner als der Abstand zwischen den zwei Punkten eines jeden Grundpunktmusters, und c) er beträgt 30 % des Abstandes der virtuellen Mittelpunkte von zwei benachbart nebeneinander oder übereinander angeordneten Teilflächen. Außerdem kann bei den erfindungsgemäßen Druckverfahren der Abstand zwischen den zwei Punkten eines jeden Grundpunktmusters 60 % des Abstandes der virtuellen Mittelpunkte von zwei benachbart nebeneinander oder übereinander angeordneten Teilflächen betragen. Vorteilhafterweise ist der Abstand der virtuellen Mittelpunkte von zwei benachbart übereinander angeordneten Teilflächen gleich dem Abstand der virtuellen Mittelpunkte von zwei benachbart nebeneinander angeordneten Teilflächen. Als günstig hat es sich erwiesen, wenn eine oder mehrere Teilflächen benutzt werden, um darin eine Fehlererkennung oder eine Fehlerkorrektur ermöglichende Daten zu speichern.

Außerdem wird bei einem Verfahren zum Speichern von Daten, bei welchem die zu speichernden Daten unter Verwendung einer Druckvorrichtung in Form eines eine Vielzahl von Punkten umfassenden Punktmusters auf die Oberfläche eines bedruckbaren Mediums gedruckt werden, wobei das Punktmuster mindestens einen eine bestimmte Fläche auf dem bedruckbaren Medium belegenden Punktmuster-Block umfasst, und wobei die Fläche, die der mindestens eine Punktmuster-Block auf dem zu bedruckenden Medium belegt, eine Vielzahl von nebeneinander und/oder übereinander angeordneten Teilflächen gleicher Größe enthält, in welchen jeweils ein einen Teil der zu speichernden Daten repräsentierendes Punktmuster gedruckt ist, diese Aufgabe dadurch gelöst, dass zum Drucken ein Digitaldrudcvertahren verwendet wird. Dies hat den zusätzlichen Vorteil, dass durch die Digitaldruckvertahren eine Individualisierung der Daten erreicht werden kann.

Als vorteilhaft hat es sich erwiesen, wenn als Digitaldruckverfahren ein Verfahren für die Massenproduktion wie z. B ein Tintenstrahlverfahren, ein Thermosublimationsverfahren, ein Thermotransferverfahren oder ein Laserdruckverfahren verwendet werden. Bevorzugt weist jede Teilfläche eines der mehreren verschiedenen Grundpunktmuster und / oder das Referenzpunktmuster auf. Besonders bevorzugt besteht jedes der mehreren Grundpunktmuster aus zwei Punkten, die in Bezug auf einen virtuellen Bezugspunkt innerhalb der jeweiligen Teilfläche punktsymmetrisch angeordnet sind. Dies weist den Vorteil auf, dass die Anordnung der Punkte im Grundpunktmuster die Reproduzierbarkeit erhöht.

Weiterhin wird bei einem Verfahren zum Auslesen von unter Verwendung eines der oben genannten Speicherverfahren gespeicherten Daten, wobei ein Bild von wenigstens einem Teil des das Punktmuster enthaltenden Bereichs des bedruckten Mediums aufgenommen wird, aus dem Bild die Lage von wenigstens einem Teil der darin enthaltenen Punkte ermittelt wird, für jede Teilfläche eines Punktmuster-Blocks zur Bestimmung der Daten ein Winkelbestimmungsverfahren und / Längenbestimmungsverfahren verwendet wird, die Aufgabe dadurch gelöst, dass bei dem Winkelbestimmungsverfahren der Winkel der virtuellen Verbindungslinie zwischen dem in der jeweiligen Teilfläche vorhandenen Punktepaar in Bezug auf eine virtuelle Bezugslinie, oder der Winkel der virtuellen Verbindungslinie zwischen dem virtuellen Mittelpunkt der jeweiligen Teilfläche und einem der beiden Punkte, die in der jeweiligen Teilfläche enthalten sein müssten, in Bezug auf die virtuelle Bezugslinie ermittelt wird, und abhängig vom Wnkelbereich, innerhalb dessen der ermittelte Winkel liegt, die durch das in der betreffenden Teilfläche enthaltene Punktmuster repräsentierten Daten bestimmt werden, oder dadurch gelöst, dass bei dem Längenbestimmungsverfahren der Abstand der Punkte des Punktepaars ermittelt wird und abhängig vom Abstandsbereich, innerhalb dessen der ermittelte Abstand liegt, die durch das in der betreffenden Teilfläche enthaltene Punktmuster repräsentierten Daten bestimmt werden. Das erfindungsgemäße Datenausleseverfahren weist aufgrund der Bestimmung des relativen Abstandes der Schwerpunkte benachbarter Druckpunkte eine erhöhte Toleranz gegenüber Schwankungen der Positionierung auf.

Bevorzugt erfolgt die Aufnahme des Bildes durch eine Punktmuster-Lesevorrichtung und wird der Bereich des bedruckten Mediums, von welchem durch die Punktmuster-Lesevorrichtung ein Bild aufgenommen wird, durch eine in der Punktmuster-Lesevorrichtung vorgesehene Lichtquelle beleuchtet. Besonders bevorzugt wird die Wellenlänge oder der Wellenlängenbereich des von der Lichtquelle abgegebenen Lichts so gewählt, dass entweder in dem Bereich des bedruckten Mediums, von welchem durch die Punktmuster-Lesevorrichtung ein Bild aufgenommen wird, nur die Punkte des zu erfassenden Punktmusters das von der Lichtquelle abgegebene Licht reflektierten, oder dass in dem Bereich des bedruckten Mediums, von welchem durch die Punktmuster-Lesevorrichtung ein Bild aufgenommen wird, nur die Punkte des zu erfassenden Punktmusters das von der Lichtquelle abgegebene Licht nicht reflektieren. Als vorteilhaft hat es sich erwiesen, wenn die Lichtquelle aus einer Gruppe ausgewählt ist, die eine Infrarotiichtquelle, eine Licht mit einer im Bereich von 900 bis 980 nm liegenden Wellenlänge abstrahlende Lichtquelle, eine UV-Lichtquelle und eine sichtbares Licht abstrahlende Lichtquelle umfasst. Bei einem bevorzugten Ausführungsbeispiel der vorliegenden Erfindung erfolgt die Aufnahme des Bildes durch eine Punktmuster-Lesevorrichtung und wird das Bild von dem das Punktmuster enthaltenden Bereich des bedruckten Mediums durch eine in der Punktmuster-Lesevorrichtung vorgesehene Kamera aufgenommen. In diesem Zusammenhang hat es sich als besonders vorteilhaft erwiesen, wenn die verwendete Kamera aus einer ausschließlich für von den Punkten des Punktmusters reflektiertes Licht empfindlichen Kamera, einer ausschließlich für nicht von den Punkten des Punktmusters reflektiertes Licht empfindlichen Kamera, einer infrarotlichtempfindlichen Kamera, einer für Licht mit einer im Bereich von 900 - 980 nm liegenden Wellenlänge empfindlichen Kamera, eine für UV-Licht empfindlichen Kamera, einer für sichtbares Licht empfindlichen Kamera und einer für einen bestimmten Teil des sichtbaren Lichts empfindlichen Kamera ausgewählt wird. Weiterhin kann bei dem erfindungsgemäßen Verfahren dann, wenn die Pixel des aufgenommenen Bildes mehr als zwei verschiedene Intensitätswerte aufweisen oder aufweisen können, eine Transformierung des Bildes durchgeführt werden, nach welcher die Pixel des Bildes nur einen minimalen oder einen maximalen Intensitätswert aufweisen können. In diesem Zusammenhang kann der zur Transformierung verwendete Schwellenwert dem durchschnittlichen Intensitätswert einer bestimmten Anzahl von Pixeln des aufgenommenen Bildes entsprechen. Vorteilhafterweise wird bei diesem Verfahren ausgehend von der Bildmitte spiralförmig nach außen nach im aufgenommenen Bild enthaltenen Punkten des Punktmusters gesucht. Dabei hat es sich als besonders günstig erwiesen, dass dann, wenn von drei L-förmig aneinandergrenzenden Teilflächen die darin enthaltenen Punktepaare gefunden wurden, die Lage der Mittelpunkte der daran angrenzenden weiteren Teilflächen berechnet werden, und die Suche nach den in den jeweiligen Teilflächen enthaltenen Punktepaaren auf einen um den berechneten Mittelpunkt herum verlaufenden ringförmigen Bereich beschränkt wird. Weiterhin kann bei diesen Verfahren eine Teilfläche, in deren Mitte sich ein Punkt befindet, als die das Referenzpunktmuster enthaltende Teilfläche behandelt werden und der in der Mitte der Teilfläche vorhandene Punkt als einer der Punkte des Referenzpunktmusters behandelt werden. Als vorteilhaft hat es sich erwiesen, wenn die virtuelle Verbindungslinie zwischen den beiden anderen Punkten des Referenzpunktmusters als die Bezugslinie verwendet wird.

Ein weiter Gesichtspunkt der vorliegenden Erfindung betrifft eine Anwendung des Auslesens gespeicherter Daten in Mikropunkt-Systemen (Microdot) zur benutzergeführten Steuerung von z. B. Anzeige- oder Wiedergabesystemen. Bei einem Verfahren zum Auslesen der in Mikropunkt-Systemen gespeicherten Daten wird bei einer Relativdrehbewegung einer Punktmuster-Lesevorrichtung zum bedruckten Medium eine Änderung der Winkel erfasst. Die absolute Änderung des Winkels oder die Geschwindigkeit der erfassten Winkeländerung können z. B. in Abhängigkeit von dem Auslesebereich auf dem bedruckten Medium ein entsprechendes Vorspulen oder Rückspulen eines Filmes oder eine entsprechende Verstellung der Lautstärke bewirken. Somit kann durch die in dem Mikropunkt-System gespeicherten Daten z. B. eine bestimmte Filmsequenz aufgerufen werden, während der Nutzer die Wiedergabegeschwindigkeit, die Helligkeit, die Lautstärke oder auch die Sprachversion gezielt beeinflussen bzw. wählen kann. Bei entsprechend bedruckten Begleitmedien für z. B. digital vorliegenden Video- und/oder Audioinformationen kann ein besonders einfacher Zugriff auf z. B. bestimmte Filmsequenzen oder Musikstücke und eine intuitive Steuerung bewirkt werden. Auf diese Weise ist auch möglich, dass der Benutzer in einem Spiel z. B. ein Rennauto lenkt. Diese Anwendungen weisen den Vorteil auf, dass eine besonders intuitive Steuerung für viele Systeme ermöglicht wird. Die Funktionen von Potentiometern oder Schaltern können auf diese Weise für verschiedenste Steuerungen im Zusammenhang mit den auf dem bedruckten Medium gespeicherten Daten erreicht werden. Alternativ und / oder zusätzlich kann eine Änderung des Neigungswinkel der Punktmuster-Lesevorrichtung zum bedruckten Medium für die Steuerung verwendet werden. Dieses erfindungsgemäße Steuerungsverfahren ist nicht auf die nach den oben aufgeführten Druckverfahren gespeicherten Daten beschränkt, sondern kann bei allen Mikropunkt-Systemen mit Winkelinformationen angewendet werden und / oder auch bei Mikropunkt-Systemen angewendet werden, bei denen der Neigungswinkel der Punktmuster-Lesevorrichtung zum bedruckten Medium erfasst werden kann.

Vorteilhafte Weiterbildungen der Erfindung sind den Unteransprüchen, der folgenden Beschreibung und den Figuren entnehmbar.

Die Erfindung wird nachfolgend anhand eines Ausführungsbeispiels unter Bezugnahme auf die Figuren näher erläutert. Es zeigen:
- Figur 1: einen von einem Rahmen umgebenen Bereich, innerhalb dessen sich das Punktmuster befindet, das durch die im folgenden beschriebenen Verfahren erzeugt bzw. erfasst und decodiert wird,
- Figur 2: einen der Punktmuster-Blöcke, die in dem in Figur 1 gezeigten Bereich enthalten sind,
- Figur 3A: ein erstes Grundpunktmuster,
- Figur 3B: ein zweites Grundpunktmuster,
- Figur 3C: ein drittes Grundpunktmuster,
- Figur 3D: ein viertes Grundpunktmuster,
- Figur 4: ein erstes Referenzpunktmuster,
- Figur 5: ein aus dem ersten Referenzpunktmuster und dem ersten Grundpunktmuster zusammengesetztes Punktmuster,
- Figur 6: den in der Figur 2 gezeigten Punktmuster-Block mit Angabe der Zahlenwerte, die den Grundpunktmustem zugeordnet sind, die in dem in der Figur 2 dargestellten Punktmuster-Block enthalten sind.

Zu den Figuren sei vorab angemerkt, dass es sich bei diesen nur um schematische, nicht maßstabsgetreue Darstellungen handelt.

Das im Folgenden beschriebene System umfasst:
- ein Verfahren zum Speichern von Daten, bei welchem die zu speichernden Daten unter Verwendung einer Druckvorrichtung in Form eines eine Vielzahl von Punkten umfassenden Punktmusters auf die Oberfläche eines bedruckbaren Mediums gedruckt werden, und
- ein Verfahren zum Erfassen und Decodieren des auf die Oberfläche des bedruckbaren Mediums gedruckten Punktmusters.

Das bedruckbare Medium wird in den meisten Fällen Papier, d.h. eine Seite eines Buches, einer Zeitung, einer Zeitschrift, eines Prospekts, etc. sein. Es kann sich aber auch um ein beliebiges anderes bedruckbares Medium wie beispielsweise, aber nicht ausschließlich Kunststoff oder Metallfolien etc. handeln.

Das Punktmuster kann prinzipiell an eine beliebige Stelle des zu bedruckenden Mediums gedruckt werden. Dieser Bereich kann beispielsweise durch einen diesen .Bereich umgebenden Rahmen oder eine farbige Hinterlegung gekennzeichnet werden. Das Punktmuster kann aber auch in ein auf dem bedruckten Medium abgedruckten Bild integriert werden oder über ein Bild gedruckt werden.

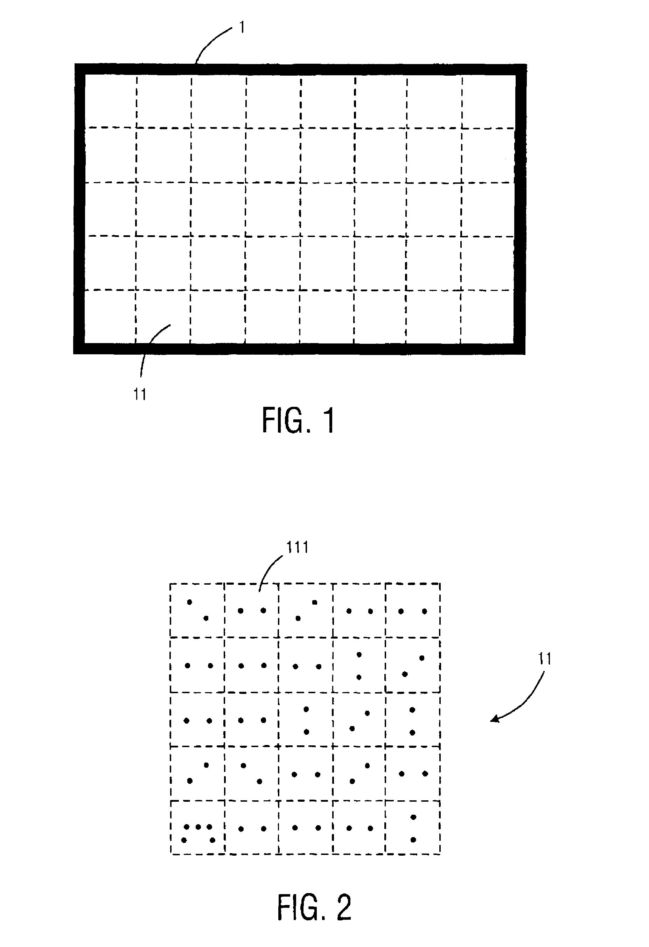

Ein von einem Rahmen umgebener Punktmuster-Bereich ist in Figur 1 dargestellt. Der Rahmen ist dabei mit dem Bezugszeichen 1 bezeichnet Der Rahmen 1 dient einzig und allein zur Markierung des das Punktmuster enthaltenden Bereiches auf dem bedruckten Medium. Anhand des Rahmens 1 kann der Benutzer des Systems erkennen, an welcher Stelle er die Punktmuster-Lesevorrichtung zum Lesen des Punktmusters ansetzen muss. Für die später noch genauer beschriebene Erfassung und Decodierung des Punktmusters ist der Rahmen 1 nicht erforderlich.

Im betrachteten Beispiel ist innerhalb des Rahmens 1 eine Vielzahl von nebeneinander und übereinander angeordneten, identische Punktmuster enthaltenden Punktmuster-Blöcken 11 vorgesehen. Es sei jedoch darauf hingewiesen, dass keine zwingende Notwendigkeit besteht, eine Vielzahl von identischen Punktmuster-Blöcken 11 vorzusehen. Das gesamte Punktmuster kann prinzipiell aus beliebig vielen Punktmuster-Blöcken 11 bestehen (auch nur aus einem einzigen PunktmusterBlodc 11), und die vorhandenen Punktmuster-Blöcke 11 können identische Punktmuster enthaltende Punktmuster-Blöcke 11 oder verschiedene Punktmuster enthaltende Punktmuster-Blöcke 11 sein.

Die mehreren Punktmuster-Blöcke 11 sind im betrachteten Beispiel unmittelbar, d.h. ohne Zwischenraum neben- und übereinander angeordnet. Es könnte aber auch vorgesehen werden, dass sich zwischen den einzelnen Punktmuster-Blöcken 11 Zwischenräume befinden.

Die in der Figur 1 gestrichelt dargestellten Trennlinien zwischen den einzelnen Punktmuster-Blöcken 11 sind nur virtuelle, nicht gedruckte Linien. Zur Vermeidung von Missverständnissen sei angemerkt, dass die in den Punktmuster-Blöcken 11 enthaltenen Punktmuster aus Gründen der Übersichtlichkeit in der Figur 1 nicht dargestellt sind.

Ein einzelner Punktmuster-Block 11 ist in der Figur 2 dargestellt. Der Punktmuster-Block 11 belegt im betrachteten Beispiel auf dem zu bedruckenden Medium eine quadratische Fläche und ist in eine Vielzahl von ebenfalls quadratischen Teilflächen 111 unterteilt Es sei jedoch darauf hingewiesen, dass weder die Punktmuster-Blöcke 11 noch die Teilflächen 111 eine quadratische Form aufweisen müssen; sie könnten auch eine beliebige andere Form aufweisen. Insbesondere das Vorsehen von nicht quadratischen Teilfläche 111 kann jedoch die Ermittlung der durch das Punktmuster repräsentierten Daten erschweren.

Die in der Figur 2 gestrichelt dargestellten Trennlinien zwischen den einzelnen Teilflächen 111 sind nur virtuelle, nicht gedruckte Linien.

Die einzelnen Teilblöcke 111 sind matrixförmig nebeneinander und übereinander angeordnet Der in der Figur 2 gezeigte Punktmuster-Block 11 umfasst 25 Teilfläche 111, die in einer 5 x 5-Matrix angeordnet sind. Ein Punktmuster-Block 11 kann jedoch auch beliebig viel mehr oder weniger Teilfläche 111 enthalten. Die Anzahl der Teilflächen 111 pro Punktmuster-Block 11 hängt davon ab,
1) mit welcher Auflösung (dpi; Punkte pro Inch) das Punktmuster gedruckt wird,
2) wie umfangreich die Daten sind, die in einem Punktmuster-Block 11 gespeichert werden können sollen, und/oder wie viele verschiedene Daten in einem Punktmuster-Block 11 gespeichert werden können sollen, und
3) wie groß der Bereich ist, von welchem eine beim Auslesen der Daten verwendete Punktmuster-Lesevorrichtung in einem Arbeitsgang ein Bild erfassen kann (damit eine kleine und handliche Punktmuster-Lesevorrichtung zum Einsatz kommen kann, ist die von einem Punktmuster-Block 11 auf dem bedruckbaren Medium belegte Fläche vorzugsweise nicht größer als 2 x 2 mm).

Innerhalb einer jeden Teilfläche 111 ist ein einen Teil der zu speichernden Daten repräsentierendes Punktmuster gedruckt. Genauer gesagt enthält jede Teilfläche 111 eines von mehreren verschiedenen Grundpunktmustem.

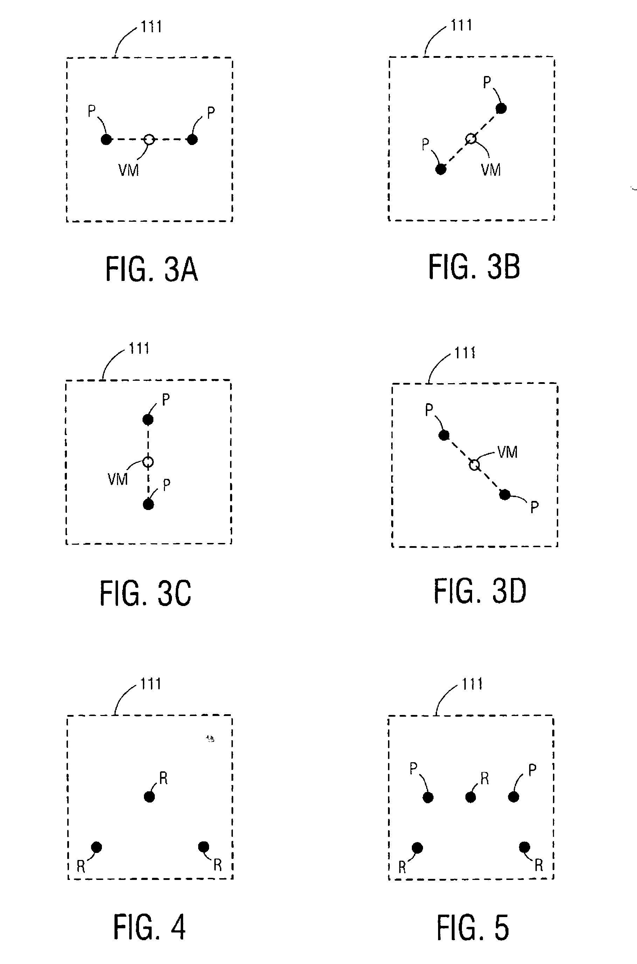

Im betrachteten Beispiel wird mit vier verschiedenen Grundpunktmustem gearbeitet. Diese Grundpunktmuster sind in den Figuren 3A bis 3D dargestellt. Die Figuren 3A bis 3D zeigen jeweils eine Teilfläche 111 mit einem darin enthaltenen Grundpunktmuster. Jedes Grundpunktmuster besteht aus zwei in den Figuren 3A bis 3D mit P bezeichneten Punkten. Die Punkte P sind jeweils punktsymmetrisch zu einem virtuellen, nicht gedruckten Mittelpunkt VM der jeweiligen Teilfläche angeordnet Die Punkte P könnten jedoch auch punktsymmetrisch zu einem beliebigen anderen, nicht den Mittelpunkt darstellenden virtuellen Bezugspunkt innerhalb der jeweiligen Teilfläche angeordnet sein. Darüber hinaus besteht auch keine zwingende Notwendigkeit, vier verschiedene Grundpunktmuster vorzusehen. Die Anzahl der verschiedenen Grundpunktmuster kann auch größer oder kleiner als vier sein, wobei derzeit eine Anzahl zwischen 3 und 8 als optimal angesehen wird.

Die verschiedenen Grundpunktmuster unterscheiden sich durch die Ausrichtung einer die zwei Punkte P eines jeweiligen Grundmusters verbindenden, in den Figuren 3A bis 3D gestrichelt eingezeichneten virtuellen Verbindungslinie. Im betrachteten Beispiel hat diese Verbindungslinie bei dem in der Figur 3A dargestellten ersten Grundpunktmuster einen horizontalen Verlauf, bei dem in der Figur 3B dargestellten zweiten Grundpunktmuster einen demgegenüber um 45° gegen den Uhrzeigersinn gedrehten Verlauf, bei dem in der Figur 3C dargestellten dritten Grundpunktmuster einen um weitere 45° gegen den Uhrzeigersinn gedrehten, also vertikalen Verlauf, und bei dem in der Figur 3D dargestellten vierten Grundpunktmuster einen um weitere 45° gegen den Uhrzeigersinn gedrehten Verlauf.

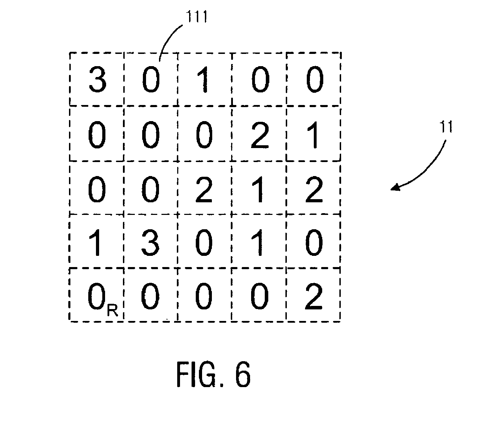

Im betrachteten Beispiel repräsentiert das in der Figur 3A gezeigte erste Grundpunktmuster den Wert 0, das in der Figur 3B gezeigte zweite Grundpunktmuster den Wert 1, das in der Figur 3C gezeigte dritte Grundpunktmuster den Wert 2, und das in der Figur 3D gezeigte vierte Grundpunktmuster den Wert 3. In der Figur 6 ist eine der Figur 2 entsprechende Darstellung gezeigt, in welcher in den jeweiligen Teilflächen 111 anstelle der Grundpunktmuster die diesen jeweils zugeordneten Werte angegeben sind. Zur Vermeidung von Missverständnissen sei darauf hingewiesen, dass der in der Figur 6 gezeigte Punktmuster-Block kein gedruckter Punktmuster-Block ist. Gedruckt wird der in der Figur 2 gezeigte Punktmuster-Block.

Von den Teilflächen 111 eines jeden Punktmuster-Blocks 11 enthält im betrachteten Beispiel die links unten gelegene Teilfläche 111 außer dem Grundpunktmuster auch noch ein Referenzpunktmuster. Dieses, in Figur 4 gezeigte Referenzpunktmuster besteht aus drei Punkten R, die sich an Stellen befinden, an welchen keines der Grundpunktmuster einen Punkt P aufweist. Einer der Referenzpunkte R liegt genau in der Mitte der das Referenzpunktmuster enthaltenden Teilfläche 111; die beiden anderen Referenzpunkte R sind in einem unterhalb des mittig liegenden Referenzpunktes R liegenden Bereich angeordnet, wobei die virtuelle, d.h. nicht gedruckte Verbindungslinie zwischen den beiden unteren Referenzpunkten R einen horizontalen Verlauf aufweist.

Prinzipiell kann die das Referenzpunktmuster enthaltende Teilfläche 111 zusätzlich ein beliebiges der vier Grundpunktmuster enthalten. Derzeit wird allerdings bevorzugt, dass nur entweder das in der Figur 3A gezeigte erste Grundpunktmuster oder das in der Figur 3C gezeigte dritte Grundpunktmuster in Kombination mit dem Referenzpunktmuster verwendet werden. In der Figur 5 ist der Fall dargestellt, in welchem ein Teilbereich 111 eine aus einer Kombination bzw. einer Verschmelzung des Referenzpunktmusters und des in der Figur 3A gezeigten ersten Grundpunktmusters resultierendes Punktmuster enthält.

Es besteht keine zwingende Notwendigkeit, dass die das Referenzpunktmuster enthaltende Teilfläche 111 die links unten gelegene Teilfläche des diese Teilfläche enthaltenden Punktmuster-Blocks 11 ist Das Referenzpunktmuster kann auch in einer beliebigen anderen Teilfläche 111 des Punktmuster-Blocks 11 enthalten sein. Die einzelnen Punkte des Punktmusters sind vorzugsweise so klein, dass sie durch das menschliche Auge nicht oder kaum sichtbar sind, müssen andererseits aber so groß sein, dass sie so viel Farbe auf dem Medium hinterlassen, dass sie von der später noch genauer beschriebenen Punktmuster-Lesevorrichtung zweifelsfrei erfassbar sind. Vorzugsweise sind die Referenzpunkte darüber hinaus so klein, dass sie beim Kopieren des bedruckten Mediums durch ein Kopiergerät nicht oder nur unvollständig mitkopiert werden.

Die Abstände zwischen den Punkten des Punktmusters sind im betrachteten Beispiel wie folgt:
1) Der Abstand zwischen den zwei Punkten eines jeden Grundpunktmusters beträgt ca. 60 % des Abstandes der virtuellen Mittelpunkte VM von zwei benachbart nebeneinander oder übereinander angeordneten Teilflächen 111.
2) Der Abstand zwischen den zwei unteren Punkten R des Referenzpunktmusters beträgt ca. 70 % des Abstandes der virtuellen Mittelpunkte VM von zwei benachbart nebeneinander oder übereinander angeordneten Teilfläche 111.
3) Der Abstand der virtuellen Verbindungslinie zwischen den zwei unteren Punkten R des Referenzpunktmusters vom oberen Punkt R des Referenzpunktmusters beträgt ca. 30 % des Abstandes der virtuellen Mittelpunkte VM von zwei benachbart nebeneinander oder übereinander angeordneten Teilflächen 111.
4) Da die Teilflächen 111 im betrachteten Beispiel quadratisch sind, ist der Abstand der virtuellen Mittelpunkte VM von zwei benachbart übereinander angeordneten Teilflächen 111 gleich dem Abstand der virtuellen Mittelpunkte VM von zwei benachbart nebeneinander angeordneten Teilflächen 111.

Die genannten Abstände beziehen sich jeweils auf das Zentrum der jeweiligen Punkte.

Auf die genannten Abstände 1) bis 3) besteht keine Einschränkung. Dies gilt sowohl für die einzelnen Abstände (beispielsweise könnte der Abstand 1) auch nur 60 % des Abstandes der virtuellen Mittelpunkte VM von zwei benachbart nebeneinander oder übereinander angeordneten Teilflächen 111 betragen), als auch auf die Größenverhältnisse der genannten Abstände untereinander (beispielsweise könnte der Abstand 1) auch größer sein als der Abstand 2)). Die einzelnen Abstände sollten sich nur so deutlich voneinander unterscheiden, dass beim Auslesen des Punktmusters zweifelsfrei erkennbar ist, ob es sich bei einem jeweiligen Punkt um einen Punkt eines Grundpunktmusters oder um einen Punkt des Referenzpunktmusters handelt, und welche Punkte zusammen ein Grundpunktmuster bilden.

Druckt man den in der Figur 2 gezeigten Punktmuster-Block 11 mit einer Auflösung von 2400 dpi (dots per inch), und legt 37 x 37 dots als Größe für jede der Teilflächen 111 fest, so beträgt die Größe des in der Figur 2 gezeigten Punktmuster-Blocks 11 185 x 185 dots, also 1,958 x 1,958 mm.

Da Digitaldruckverfahren im Vergleich zu Offsetdruckverfahren eine deutlich geringere Reproduzierbarkeit und Genauigkeit aufweisen, besteht in der Fachwelt das Vorurteil, dass für Druckverfahren nach dem Oberbegriff des unabhängigen Anspruches 1 ausschließlich Offsetdruckverfahren verwendet werden könnten, um eine genaue absolute Positionierung der Punkte im Punktmuster zum fehlerfreien Auslesen der Daten sicherzustellen. Bei den Untersuchungen zu der vorliegenden Erfindung hat es sich jedoch erwiesen, dass zur Speicherung der Daten auch Digitaldruckverfahren verwendet werden können, wenn zur Bestimmung der Daten die relative Anordnung der Schwerpunkte benachbarter Punkte und nicht die absoluten Anordnungen der Punkte verwendet werden. Neben günstigeren Herstellungskosten der Digitalverfahren liegt ein weiterer Vorteil darin, dass bei Digitaldruckverfahren im Gegensatz zu Offsetverfahren die Daten individualisiert werden können.

Bei stark beanspruchten Produkten wie z. B. bei bestimmten Spiel- oder Sammelkarten ist zur Verlängerung der Lebensdauer vorteilhaft, die Punktmuster in einer größeren Auflösung zu drucken. Will man die von dem in der Figur 2 gezeigten Punktmuster-Block 11 belegte Fläche von 2 x 2 mm nicht vergrößern, muss man die Anzahl der Teilflächen 111 pro Punktmuster-Block 11 verringern. Beispielsweise könnte anstelle des in der Figur 2 gezeigten Punktmuster-Blocks 11 ein 3 x 3 = 9 Teilflächen 111 umfassender Punktmuster-Block 11 verwendet werden, der 180 x 180 dots, also 1,905 x 1,905 mm groß ist.

Wenn die das Referenzpunktmuster enthaltende Teilfläche 11 nur eines von zwei verschiedenen Grundpunktmustem enthalten kann, können in dem in der Figur 2 gezeigten Punktmuster-Block 2⁴⁹ unterschiedliche Informationen gespeichert werden. Bei Verwendung eines für stärker beanspruchte Produkte besser geeigneten, aus nur 3 x 3 Teilflächen 111 bestehenden Punktmuster-Blocks 11 können in einem Punktmuster-Block 2¹⁷ unterschiedliche Informationen gespeichert werden.

Wenn kein Bedarf besteht, so viele unterschiedliche Informationen speichern zu können, können die Teilflächen 111 teilweise benutzt werden, um darin eine Fehlererkennung oder eine Fehlerkorrektur ermöglichende Daten zu speichern.

Bei dem in der Figur 2 dargestellten Beispiel werden im betrachteten Beispiel von den insgesamt 25 Teilflächen 111 nur 10 Teilflächen zur Nutzdatenspeicherung benötigt. Hierbei handelt es sich um die Teilflächen Nr. 2 bis 11; die Teilflächen sind durchgehend von 1 bis 25 nummeriert, wobei mit der Nummerierung bei der links unten liegenden, das Referenzpunktmuster enthaltenden Teilfläche mit 1 begonnen wird und die Teilflächen Zeile für Zeile jeweils von links nach rechts durchnummeriert sind. Die in den Teilflächen Nr. 2 bis 11 gedruckten Punktmuster (0002130100) werden in den Teilflächen 16 bis 25 wiederholt. In den restlichen Teilflächen Nr. 12 bis 15 wird eine codierte Prüfsumme geschrieben.

Zur Bildung der nicht codierten Prüfsumme werden die Werte, die den in die Teilflächen 2 bis 11 gedruckten Punktmustem jeweils zugeordnet sind, mit einem jeweils zugeordneten Wert multipliziert, und die Ergebnisse der Multiplikationen addiert. Dies ist in der folgenden Tabelle veranschaulicht:

| Teilfläche Nr. | 2 | 3 | 4 | 5 | 6 | 7 | 8 | 9 | 10 | 11 | |
|---|---|---|---|---|---|---|---|---|---|---|---|
| Punktmusterwert | 0 | 0 | 0 | 2 | 1 | 3 | 0 | 1 | 0 | 0 | |
| Multiplikator | 10 | 9 | 8 | 7 | 6 | 5 | 4 | 3 | 2 | 1 | |
| Ergebnis | 0 | +0 | +0 | +14 | +6 | +15 | +0 | +3 | +0 | +0 | =38 |

Die nicht codierte Prüfsumme beträgt im betrachteten Beispiel demnach 38. Diese nicht codierte Prüfsumme wird so codiert, dass sich bei Multiplikation der der codierten Prüfsumme entsprechenden Punktmusterwerte mit einem jeweils zugeordneten Wert und Addition der Multiplikationsergebnisse die nicht codierte Prüfsumme als Ergebnis ergibt. Dies ist in der folgenden Tabelle veranschaulicht:

| Teilfläche Nr. | 12 | 13 | 14 | 15 | |
|---|---|---|---|---|---|
| Codierte Prüfsumme | 0 | 2 | 1 | 2 | |
| Multiplikator | 64 | 16 | 4 | 1 | |
| Ergebnis | 0 | +32 | +4 | +2 | = 38 |

Demnach lautet die codierte Prüfsumme 0212. D.h., in die Teilfläche Nr. 12 wird das in der Figur 3A gezeigte erste Grundpunktmuster gedruckt, in die Teilflächen Nr. 13 und 15 das in der Figur 3C gezeigte dritte Grundpunktmuster, und in die Teilfläche Nr.14 das in der Figur 3B gezeigte zweite Grundpunktmuster.

Bei der Prüfsummenberechnung wurde die das Referenzpunktmuster enthaltende Teilfläche Nr. 1 außer Acht gelassen. Dies ist deshalb der Fall, weil diese (das Referenzpunktmuster enthaltende) Teilfläche nur das in der Figur 3A gezeigte erste Grundpunktmuster oder das in der Figur 3C gezeigte dritte Grundpunktmuster enthalten kann, und diese beiden Grundpunktmuster sehr gut unterscheidbar sind, so dass nur eine vernachlässigbar geringe Gefahr besteht, dass beim Auslesen des in der Teilfläche Nr. 1 gedruckten Punktmusters ein Fehler auftritt.

Bei einem nur 3 x 3 = 9 Teilflächen 111 umfassenden Punktmuster-Block 11 kann beispielsweise so vorgesehen werden, dass von den insgesamt 9 Teilflächen nur 8 Teilflächen, genauer gesagt nur die Teilflächen Nr. 1 bis 8 für die Nutzdatenspeicherung verwendet werden, und in die Teilfläche Nr. 9 eine Prüfziffer geschrieben wird.

Diese Prüfziffer wird in zwei Schritten ermittelt. Zunächst werden die Werte, die den in die Teilflächen 2 bis 8 gedruckten Grundpunktmustem jeweils zugeordnet sind, mit einem jeweils zugeordneten Wert multipliziert. Dann werden die Ergebnisse der Multiplikationen, an welchen Punktmusterwerte von Teilflächen mit gerader Nummer beteiligt waren, zu einem ersten Ergebnis addiert, und die Ergebnisse der restlichen Multiplikationen zu einem zweiten Ergebnis addiert. Dies ist in der folgenden Tabelle beispielhaft veranschaulicht:

| Teilfläche Nr. | 2 | 3 | 4 | 5 | 6 | 7 | 8 | |
|---|---|---|---|---|---|---|---|---|
| Punktmusterwert | 0 | 0 | 1 | 3 | 0 | 0 | 0 | |
| Multiplikator | 7 | 6 | 5 | 4 | 3 | 2 | 1 | |
| Ergebnis 1 | 0 | | +5 | | +0 | | +0 | = 5 |
| Ergebnis 1 | | +0 | | +12 | | +0 | | = 12 |

Anschließend wird abhängig vom Ergebnis 1 und vom Ergebnis 2 die Prüfziffer nach folgendem Schema festgelegt:

Wenn das Ergebnis 1 eine gerade Zahl ist, und das Ergebnis 2 eine gerade Zahl ist, wird in die Teilfläche Nr. 9 das in der Figur 3A gezeigte erste Grundpunktmuster als Prüfziffer gedruckt.

Wenn das Ergebnis 1 eine gerade Zahl ist, und das Ergebnis 2 eine ungerade Zahl ist, wird in die Teilfläche Nr. 9 das in der Figur 3B gezeigte zweite Grundpunktmuster als Prüfziffer gedruckt.

Wenn das Ergebnis 1 eine ungerade Zahl ist, und das Ergebnis 2 eine gerade Zahl ist, wird in die Teilfläche Nr. 9 das in der Figur 3C gezeigte dritte Grundpunktmuster als Prüfziffer gedruckt.

Wenn das Ergebnis 1 eine ungerade Zahl ist, und das Ergebnis 2 eine ungerade Zahl ist, wird in die Teilfläche Nr. 9 das in der Figur 3D gezeigte vierte Grundpunktmuster als Prüfziffer gedruckt.

Das auf das bedruckbare Medium gedruckte Punktmuster stellt eine maschinenlesbare Information dar, die - anders als es beispielsweise bei einem Strichcode der Fall ist - vom menschlichen Auge nicht oder jedenfalls nicht störend wahrgenommen wird. Die geringe Größe, die die Punkte des Punktmusters aufweisen können und die zwar kleinen, aber im Vergleich zur Punktgröße doch relativ großen Abstände zwischen den Punkten bewirken, dass das Punktmuster für das menschliche Auge nur wie ein leichter Grauschleier wirkt.

Zur Ermittlung der in Form des Punktmusters gespeicherten Information wird eine Punktmuster-Lesevorrichfiung benötigt, die mit einer Datenverarbeibungseinrichtung wie beispielsweise einem PC verbunden ist. Die Punktmuster-Lesevorrichtung ist vorzugsweise ein handliches Gerät, beispielsweise in Form eines Stiftes. Sie wird über den das Punktmuster enthaltenden Bereich auf das mit dem Punktmuster bedruckte Medium aufgesetzt und erzeugt von zumindest einem Teil des das Punktmuster enthaltenden Bereichs ein Bild. Weil das Punktmuster im betrachteten Beispiel eine Vielzahl von identische Punktmuster enthaltenden Punktmuster-Blöcken 11 enthält, ist es unkritisch, wo genau die Punktmuster-Lesevorrichtung aufgesetzt wird. Die Punktmuster-Lesevorrichtung übergibt die das erfasste Bild repräsentierenden Daten an die Datenverarbeitungseinrichtung. Die Datenverarbeitungseinrichtung extrahiert aus dem von der Punktmuster-Lesevorrichtung aufgenommenen Bild das darin enthaltene Punktmuster, ermittelt daraus die durch das Punktmuster repräsentierten Daten, und führt abhängig von diesen Daten die durch diese vorgegebene Operation aus. Die auszuführende Operation kann jede Operation sein, zu deren Ausführung die Datenverarbeitungseinrichtung in der Lage ist, also beispielsweise, aber bei weitem nicht ausschließlich die Anzeige bzw. Wiedergabe von Text-, Bild-, oder Audiodaten, wobei diese Daten in der Datenverarbeitungseinrichtung, auf einer CD, einer DVD, oder einem beliebigen anderen Datenträger gespeichert sein können, oder aus dem Internet oder von anderswo geladen werden. Die anzuzeigenden bzw. wiederzugebenden Informationen können auch im gelesenen Punktmuster enthaltene Informationen sein. Insbesondere wenn die von der Datenverarbeitungseinrichtung auszuführende Operation einen Zugriff auf das Internet umfasst, kann auch vorgesehen werden, dass auf diesem Wege gleich eine Buchung oder Bestellung getätigt oder eine sonstige Interaktion durchgeführt wird.

Die Punktmuster-Lesevorrichtung enthält im betrachteten Beispiel eine Infrarotlichtquelle zur Beleuchtung des durch die Punktmuster-Lesevorrichtung zu erfassenden Bereiches auf dem bedruckten Medium, sowie eine für Infrarotlicht empfindliche Kamera. Eine solche Kamera ist beispielsweise eine Kamera, deren Sensor infrarotlichtempfindlich ist, und vor deren Sensor üblicherweise ein nur für Infrarotlicht durchlässiger Filter angeordnet ist (damit billige Sensoren verwendet werden können, die nicht nur für Infrarotlicht empfindlich sind). Das Infrarotlicht, das von der Infrarotlichtquelle abgegeben wird, und für welches die Kamera sensibel ist, weist im betrachteten Beispiel eine Wellenlänge von ca. 900 bis 980 nm auf, wobei hierauf jedoch keine Einschränkung besteht.

In diesem Fall, d.h. bei Verwendung von Infrarotlicht zur Punktmustererfassung ist die Farbe, unter Verwendung welcher die Punkte des Punktmusters gedruckt sind, vorzugsweise eine Infrarotlicht absorbierende Farbe. Dies ist in der Regel eine einen Kohlenstoffanteil aufweisende und somit für das menschliche Auge schwarz wirkende Farbe. Wie vorstehend bereits erwähnt wurde, wirkt das Punktmuster für das menschliche Auge aber dennoch nur wie ein leichter Grauschleicher. Wie vorstehend ebenfalls bereits erwähnt wurde, kann das Punktmuster auch Bestandteil eines auf das bedruckte Medium gedruckten Bildes sein oder über ein Bild gedruckt sein. In diesem Fall müsste die zum Drucken des Bildes verwendete schwarze Farbe eine kohlenstofffreie, d.h. Infrarotlicht nicht absorbierende schwarze Farbe sein; nur die das Punktmuster repräsentierenden Bildbestandteile dürften mit kohlenstofthaltiger schwarzer Farbe gedruckt sein.

Im betrachteten Beispiel ist die Kamera eine Farbkamera, die ein beispielsweise 352 x 288 Pixel oder ein 320 x 240 Pixel umfassendes Bild liefert. Die Bilddaten umfassen für jedes Pixel einen 1 Byte umfassenden Rot-Intensitätswert, einen 1 Byte umfassenden Grün-Intensitätswert, und einen 1 Byte umfassenden Blau-Intensitätswert. Da vorliegend nur Infrarotlicht auf den Sensor trifft, sind die Intensitätswerte für alle drei Farben stets gleich (die die Intensitätswerte für die verschiedenen Farben erfassenden Sensorelemente in der Kamera sind für Infrarotlicht gleich empfindlich). Es reicht deshalb aus, wenn der Bildauswertung die Intensitätswerte von nur einem einzigen der drei Farbkanäle zugrundegelegt werden, wobei es keine Rolle spielt, um welchen Farbkanal es sich hierbei handelt.

Es dürfte einleuchten und bedarf keiner näheren Erläuterung, dass auch eine Schwarz/Weißkamera zum Einsatz kommen kann, bei welcher jedes Pixel nur einen z. B. 1 Byte umfassenden farbunabhängigen Intensitätswert umfasst.

Der Vollständigkeit halber sei bereits an dieser Stelle darauf hingewiesen, dass keine zwingende Notwendigkeit besteht, eine Punktmuster-Lesevorrichtung mit einer Infrarotlichtquelle und einer infrarotsensitiven Kamera zu verwenden. Beispielsweise wäre es auch denkbar, eine Punktmuster-Lesevorrichtung mit einer UV-Licht-Quelle und einer UV-Lichtsensitiven Kamera zu verwenden, oder mit beliebigen anderen Lichtwellenlängen zu arbeiten. Dabei müssten dann natürlich auch die Eigenschaften der Druckfarben, die zum Drucken des Punktmusters und der nicht das Punktmuster repräsentierenden Teile des Druckbildes verwendet werden, entsprechend modifiziert werden. Wie das Punktmuster genau erfasst wird, ist von untergeordneter Bedeutung. Wichtig ist in erster Linie, dass durch die Punktmuster-Lesevorrichtung Bilddaten erzeugt werden, aus welchen die Datenverarbeitungseinrichtung die Punkte des Punktmusters ermitteln kann.

Die Datenverarbeitungseinrichtung wählt aus der Mitte des ihr von der Punktmuster-Lesevorrichtung zugeführten Bildes einen kleinen Bereich aus, dessen Größe beispielsweise der Größe einer Leitfläche 111 entspricht, und ermittelt den durchschnittlichen Intensitätswert für diesen Bereich. Falls das Bild sehr dunkel ist, also einen durchschnittlichen Intensitätswert, der kleiner als 64 ist, aufweist, wird davon ausgegangen, dass die Kamera kein Punktmuster erfasst hat, und wird die Bildauswertung abgebrochen.

Anschließend wird das Bild in ein Schwarz/Weiß-Bild transformiert, welches nur die Intensitäten 0 (schwarz) und 255 (weiß) aufweist. Als anfänglicher Schwellenwert wird der zuvor ermittelte durchschnittliche Intensitätswert verwendet. Die Schwarz/Weiß-Transformation beginnt in der Mitte des Bildes und schreitet spiralförmig nach außen fort. Dabei wird jedes Pixel des Bildes mit dem Schwellenwert verglichen, und die Intensität des jeweiligen Pixels abhängig vom Vergleichsergebnis entweder auf 0 oder 255 gesetzt. Während der Schwarz/Weiß-Transformation wird der verwendete Schwellenwert ständig aktualisiert. Der jeweils aktuelle Schwellenwert entspricht der durchschnittlichen Intensität, die die zuletzt transformierten 32 Bildpunkte vor deren Transformation aufwiesen.

Nach der Transformation des von der Punktmuster-Erfassungsvorrichtung erhaltenen Bildes in ein Schwarz/Weiß-Bild wird in der Bildmitte beginnend und spiralförmig nach außen gehend nach Punkten des zu erfassenden Punktmusters gesucht. Anhand der Relativlage und der gegenseitigen Abstände der dabei gefundenen Punkte kann ermittelt werden, welche Punkte ein Grundpunktmuster repräsentierende zusammengehörende Punktepaare sind. Sobald die Punktepaare, die die Grundpunktmuster von drei L-förmig aneinandergrenzenden Teilflächen 111 repräsentieren, gefunden wurden, vereinfacht sich die Suche nach den in den benachbarten Teilflächen 111 enthaltenen Grundpunktmustem. Aus den nunmehr vorliegenden Informationen kann nämlich berechnet werden, wo sich die virtuellen Mittelpunkte der benachbarten Teilflächen 111 befinden, und die Suche nach den in den benachbarten Teilflächen enthaltenen Grundpunktmustem kann auf einen um den virtuellen Mittelpunkt herum verlaufenden ringförmigen Bereich beschränkt werden.

Wenn bei der Suche nach weiteren Punkten des Punktmusters ein in der Mitte eines Teilbereiches 111 liegender Punkt gefunden wird, wird entschieden, dass die betreffende Teilfläche die das Referenzpunktmuster enthaltende Teilfläche ist, und wird auch gezielt nach den zwei weiteren Punkten R des Referenzpunktmusters gesucht. Die virtuelle Verbindungslinie zwischen diesen zwei weiteren Punkten R des Referenzpunktmusters wird als eine bei der späteren Punktmusterauswertung benötigte Bezugslinie verwendet.

Da die Lage der das Referenzpunktmuster enthaltenden Teilfläche 111 innerhalb des Punktmuster-Blocks 11 bekannt ist, können nun für alle Teilflächen 111 des Punktmuster-Blocks 11 die Lage der in den jeweiligen Teilflächen enthaltenen Punkte und der Winkel ermittelt werden, den die virtuelle Verbindungslinie zwischen den beiden Punkten des in der jeweiligen Teilfläche enthaltenen Grundpunktmusters in Bezug auf die virtuelle Bezugslinie aufweist.

Liegt dieser Winkel im Bereich zwischen -22° bzw. +338° und +22° oder zwischen +158° und +202°, so wird entschieden, dass das in der betreffenden Teilfläche 111 enthaltene Grundpunktmuster das in der Figur 3A gezeigte erste Grundpunktmuster ist, und wird dem in der betreffenden Teilfläche 111 enthaltenen Punktmuster der Wert 0 zugeordnet.

Liegt der Winkel im Bereich zwischen +22° und +67° oder zwischen +203° und +247°, so wird entschieden, dass das in der betreffenden Teilfläche 111 enthaltene Grundpunktmuster das in der Figur 3B gezeigte zweite Grundpunktmuster ist, und wird dem in der betreffenden Teilfläche 111 enthaltenen Punktmuster der Wert 1 zugeordnet.

Liegt der Winkel im Bereich zwischen +68° und +112° oder zwischen +248° und +292°, so wird entschieden, dass das in der betreffenden Teilfläche 111 enthaltene Grundpunktmuster das in der Figur 3C gezeigte dritte Grundpunktmuster ist, und wird dem in der betreffenden Teilfläche 111 enthaltenen Punktmuster der Wert 2 zugeordnet.

Liegt der Winkel im Bereich zwischen +113° und +157° oder zwischen +293° und 337°, so wird entschieden, dass das in der betreffenden Teilfläche 111 enthaltene Grundpunktmuster das in der Figur 3D gezeigte vierte Grundpunktmuster ist, und wird dem in der betreffenden Teilfläche 111 enthaltenen Punktmuster der Wert 3 zugeordnet.

Allgemein ausgedrückt bedeutet dies, dass ein bestimmtes Grundpunktmuster auch dann als dieses Grundpunktmuster identifiziert wird, wenn der Winkel zwischen der virtuellen Verbindungslinie zwischen den beiden Punkten des betreffenden Grundpunktmusters in Bezug auf die virtuelle Bezugslinie zwischen - X° und +Y° von den in den Figuren 3A bis 3D gezeigten Sollwinkeln abweicht Dabei hängen X° und Y° von der Winkeldifferenz zwischen den Sollwinkeln der in bzw. gegen den Uhrzeigersinn benachbarten virtuellen Verbindungslinien der verschiedenen Grundpunktmuster ab. Genauer gesagt handelt es sich jeweils um etwas weniger als die halbe Winkeldifferenz. Wie in den Figuren 3A bis 3D gezeigt und unter Bezugnahme darauf beschrieben ist, betragen die Sollwinkel der virtuellen Verbindungslinien in Bezug auf die virtuelle Bezugslinie
- für das in der Figur 3A gezeigte erste Grundpunktmuster 0° bzw. 180°,
- für das in der Figur 3B gezeigte zweite Grundpunktmuster 45° bzw. 225°,
- für das in der Figur 3C gezeigte dritte Grundpunktmuster 90° bzw. 270°, und
- für das in der Figur 3D gezeigte vierte Grundpunktmuster 135° bzw. 315°.
Somit betragen
- die Winkeldifferenz zwischen dem Sollwinkel der virtuellen Verbindungslinie des in der Figur 3A gezeigten ersten Grundpunktmusters und dem Sollwinkel der im Uhrzeigersinn dazu benachbarten virtuellen Verbindungslinie, also der virtuellen Verbindungslinie des in der Figur 3D gezeigten vierten Grundpunktmusters 45°, und
- die Winkeldifferenz zwischen dem Sollwinkel der virtuellen Verbindungslinie des in der Figur 3A gezeigten ersten Grundpunktmusters und dem Sollwinkel der gegen den Uhrzeigersinn dazu benachbarten virtuellen Verbindungslinie, also der virtuellen Verbindungslinie des in der Figur 3B gezeigten vierten Grundpunktmusters ebenfalls 45°,
- die Winkeldifferenz zwischen dem Sollwinkel der virtuellen Verbindungslinie des in der Figur 3B gezeigten zweiten Grundpunktmusters und dem Sollwinkel der im Uhrzeigersinn dazu benachbarten virtuellen Verbindungslinie, also der virtuellen Verbindungslinie des in der Figur 3A gezeigten ersten Grundpunktmusters 45°, und
- die Winkeldifferenz zwischen dem Sollwinkel der virtuellen Verbindungslinie des in der Figur 3B gezeigten zweiten Grundpunktmusters und dem Sollwinkel der gegen den Uhrzeigersinn dazu benachbarten virtuellen Verbindungslinie, also der virtuellen Verbindungslinie des in der Figur 3C gezeigten dritten Grundpunktmusters ebenfalls 45°,
- usw.. Folglich
- beträgt im betrachteten Beispiel der Winkel X, bis zu welchem die ermittelte virtuelle Verbindungslinie gegenüber dem Sollwinkel des ersten Grundpunktmusters im Uhrzeigersinn verdreht sein kann, damit das erste Grundpunktmuster noch als erstes Grundpunktmuster erkannt wird, etwas weniger als die Hälfte von 45°, und
- beträgt im betrachteten Beispiel der Winkel Y, bis zu welchem die ermittelte virtuelle Verbindungslinie gegenüber dem Sollwinkel des ersten Grundpunktmusters gegen den Uhrzeigersinn verdreht sein kann, damit das erste Grundpunktmuster noch als erstes Grundpunktmuster erkannt wird, ebenfalls etwas weniger als die Hälfte von 45°,
- beträgt im betrachteten Beispiel der Winkel X, bis zu welchem die ermittelte virtuelle Verbindungslinie gegenüber dem Sollwinkel des zweiten Grundpunktmusters im Uhrzeigersinn verdreht sein kann, damit das zweite Grundpunktmuster noch als zweites Grundpunktmuster erkannt wird, etwas weniger als die Hälfte von 45°,
- beträgt im betrachteten Beispiel der Winkel Y, bis zu welchem die ermittelte virtuelle Verbindungslinie gegenüber dem Sollwinkel des zweiten Grundpunktmusters gegen den Uhrzeigersinn verdreht sein kann, damit das erste Grundpunktmuster noch als zweites Grundpunktmuster erkannt wird, ebenfalls etwas weniger als die Hälfte von 45°,
- usw..

Das heißt, im betrachteten Beispiel betragen sowohl X als auch Y 22°, so dass ein jeweiliges Punktmuster
- als das erste Grundpunktmuster identifiziert wird, wenn der erfasste Winkel der virtuellen Verbindungslinie in Bezug auf die virtuelle Bezugslinie im Bereich von 0-(oder 180°) ± 22° liegt,
- als das zweite Grundpunktmuster identifiziert wird, wenn der erfasste Winkel der virtuellen Verbindungslinie in Bezug auf die virtuelle Bezugslinie im Bereich von 45° (oder 225°) ± 22° liegt,
- als das dritte Grundpunktmuster identifiziert wird, wenn der erfasste Winkel der virtuellen Verbindungslinie in Bezug auf die virtuelle Bezugslinie im Bereich von 90° (oder 270°) ± 22° liegt, und
- als das vierte Grundpunktmuster identifiziert wird, wenn der erfasste Winkel der virtuellen Verbindungslinie in Bezug auf die virtuelle Bezugslinie im Bereich von 135° (oder 315°) ± 22° liegt.

Im betrachteten Beispiel sind X und Y aufgrund der gleichmäßigen Verteilung der virtuellen Verbindungslinien der verschiedenen Grundpunktmuster gleich. Je nach dem Aussehen der verschiedenen Grundpunktmuster können X und Y aber auch unterschiedlich groß sein, und können sowohl die Werte für X, als auch die Werte für Y für die verschiedenen Grundpunktmuster unterschiedlich groß sein.

Noch allgemeiner ausgedrückt kann vorgesehen werden, dass ein jeweiliges Punktmuster
- als das erste Grundpunktmuster identifiziert wird, wenn der erfasste Winkel der virtuellen Verbindungslinie im Bereich von 0° - X1 ° und 0° + Y1 ° oder zwischen 180° - -X1° und 180° +Y1° liegt,
- als das zweite Grundpunktmuster identifiziert wird, wenn der erfasste Winkel der virtuellen Verbindungslinie im Bereich von 45° - X2° und 45° + Y2° oder zwischen 225° - X2° und 225° + Y2° liegt,
- als das dritte Grundpunktmuster identifiziert wird, wenn der erfasste Winkel der virtuellen Verbindungslinie im Bereich von 90° - X3° und 90° + Y3° oder zwischen 270° - X3° und 270° + Y3° liegt, und
- als das vierte Grundpunktmuster identifiziert wird, wenn der erfasste Winkel der virtuellen Verbindungslinie im Bereich von 135° - X4° und 135° + Y4° oder zwischen 315° - X4° und 315° + Y4° liegt,
wobei X1 bis X4 und Y1 bis Y4 unabhängig voneinander beliebig groß sein können, aber die Summen aus X1 und Y4, X2 und Y1, X3 und Y2, und X4 und Y3 vorzugsweise nicht größer sind als die jeweiligen Winkelabstände zwischen den Sollwinkeln der virtuellen Verbindungslinien.

Unabhängig hiervon besteht keine zwingende Notwendigkeit, mit den virtuellen Verbindungslinien zwischen den zwei Punkten der Grundpunktmuster zu arbeiten. Stattdessen könnte auch die virtuelle Verbindungslinie zwischen dem virtuellen Mittelpunkt der betreffenden Teilflächen und nur einem der zwei Punkte, die jede Teilfläche eigentlich enthalten muss, gearbeitet werden. Die virtuellen Mittelpunkte der Teilflächen lassen sich zumindest dann, wenn nicht alle Teilflächen eines jeweiligen Punktmusterblocks unvollständig gedruckt oder erfasst wurden, rechnerisch ermittelt werden. Dann kann auch in Fällen, in welchen eine Teilfläche aufgrund von irgendwelchen Fehlern nur einen einzigen Punkt enthält, oder nur ein einziger Punkt erkannt wurde, die in der betreffenden Teilfläche enthaltene Information zuverlässig ermittelt werden.

Wenn der ausgelesene Punktmuster-Block auch eine Fehlererkennung und/oder eine Fehlerkorrektur ermöglichende Daten enthält, kann abschließend geprüft werden, ob die aus dem Punktmuster generierten Daten fehlerfrei bestimmt wurden, und bei Bedarf eine Korrektur oder eine Wiederholung des Lese- und Auswertungsvorganges durchgeführt werden.

Bei diesem Ausführungsbeispiel beträgt der Winkelbereich 180° / (Anzahl der Grundmuster) und der Toleranzwinkel ist kleiner als ½* Winkelbereich.

Aus der vorstehenden Beschreibung ergibt sich, dass die durch das Punktmuster repräsentierten Daten auch dann, wenn die erfassten Positionen der Punkte des Punktmusters stark von deren jeweiliger Sollposition abweichen, richtig bestimmt werden können. Dies gilt sowohl für Abweichungen der gegenseitigen Punktabstände vom Sollwert, als auch für Abweichungen des Winkels der die zwei Punkte eines Grundpunktmusters verbindenden virtuellen Verbindungslinie in Bezug auf die virtuelle Bezugslinie. Folglich haben weder Ungenauigkeiten beim Druck des Punktmusters, noch eine nicht plane Lage des Druckmediums bei der Erfassung des Punktmusters durch die Kamera, noch eine ungenau arbeitende Kamera sofort eine fehlerfreie Bestimmung der durch das Punktmuster repräsentierten Daten zur Folge. Das beschriebene System ist in höchstem Maße tolerant gegenüber aus den erwähnten und anderen Problemen resultierenden tatsächlichen Punktverschiebungen und Punktmuster-Erfassungsfehler. Unabhängig hiervon ist das Punktmuster aufgrund der geringen Anzahl der Punkte, der geringen Größe der Punkte, und den zwar kleinen, aber im Verhältnis zur Punktgröße großen Abständen zwischen den Punkten für das menschliche Auge auch kaum wahrnehmbar.

### Bezugszeichenliste

- 1: Punktmuster umgebender Rahmen
- 11: Punktmusterblock
- 111: Teilfläche
- P: gedruckter Punkt eines Grundpunktmusters
- R: gedruckter Punkt eines Referenzpunktmusters
- VM: virtueller Mittelpunkt

## Patentansprüche

1. Verfahren zum Speichern von Daten, bei welchem die zu speichernden Daten unter Verwendung einer Druckvorrichtung in Form eines eine Vielzahl von Punkten umfassenden Punktmusters auf die Oberfläche eines bedruckbaren Mediums gedruckt werden,
- wobei das Punktmuster mindestens einen eine bestimmte Fläche auf dem bedruckbaren Medium belegenden Punktmuster-Block umfasst, und
- wobei die Fläche, die der mindestens eine Punktmuster-Block auf dem zu bedruckenden Medium belegt, eine Vielzahl von nebeneinander und/oder übereinander angeordneten Teilflächen gleicher Größe enthält, in welchen jeweils ein einen Teil der zu speichernden Daten repräsentierendes Punktmuster gedruckt ist,
**dadurch gekennzeichnet,**
- **dass** jede Teilfläche nur eines von mehreren verschiedenen Grundpunktmustem enthält,
- **dass** jedes der mehreren Grundpunktmuster aus zwei Punkten besteht, die in Bezug auf einen virtuellen Bezugspunkt innerhalb der jeweiligen Teilfläche punktsymmetrisch angeordnet sind, und
- **dass** die Grundpunktmuster mindestens eine der folgenden Eigenschaften aufweisen:
- sie unterscheiden sich hinsichtlich des Winkels der virtuellen Verbindungslinie zwischen den beiden Punkten des jeweiligen Grundpunktmusters in Bezug auf eine virtuelle Bezugslinie und / oder
- sie weisen einen unterschiedlichen Punktabstand auf.

2. Verfahren nach Anspruch 1, **dadurch gekennzeichnet, dass** das Punktmuster unter Verwendung einer Farbe gedruckt wird, die Infrarotlicht, insbesondere Infrarotlicht mit einer Wellenlänge im Bereich von 900 nm bis 980 nm absorbiert.

3. Verfahren nach Anspruch 1 oder 2, **dadurch gekennzeichnet, dass** die mehreren verschiedenen Grundpunktmuster aus einer der Gruppen ausgewählt werden: mindestens drei verschiedene Grundpunktmuster umfassend, bis zu acht verschiedene Grundpunktmuster umfassend oder vier verschiedene Grundpunktmuster umfassend.

4. Verfahren nach einem der Ansprüche 1 bis 3, **dadurch gekennzeichnet, dass** sich die mehreren verschiedenen Grundpunktmuster nur hinsichtlich des Winkels der virtuellen Verbindungslinie zwischen den beiden Punkten des jeweiligen Grundpunktmusters in Bezug auf eine virtuelle Bezugslinie unterscheiden.

5. Verfahren nach einem der Ansprüche 1 bis 4, **dadurch gekennzeichnet, dass** die gegenseitigen Abstände zwischen den zwei Punkten eines jeden Grundpunktmusters bei allen Grundpunktmustem gleich groß sind.

6. Verfahren nach einem der Ansprüche 1 bis 5, **dadurch gekennzeichnet, dass** der virtuelle Bezugspunkt der virtuelle Mittelpunkt der das jeweilige Grundpunktmuster enthaltenden Teilfläche ist.

7. Verfahren nach einem der Ansprüche 1 bis 6, **dadurch gekennzeichnet, dass** das Referenzpunktmuster aus drei Punkten besteht, wobei einer der Punkte in der Mitte der das Referenzpunktmuster enthaltenden Teilfläche liegt, und die beiden anderen Punkte nebeneinander in dem darunter liegenden Bereich der Teilfläche liegen, und wobei die nicht gedruckte virtuelle Verbindungslinie zwischen den beiden unteren Punkten des Referenzpunktmusters einen horizontalen Verlauf aufweist.

8. Verfahren nach Anspruch 7, **dadurch gekennzeichnet, dass** der Abstand zwischen den zwei unteren Punkten des Referenzpunktmusters derart gewählt ist, dass er mindestens eine der folgenden Bedingungen erfüllt:
- er ist größer als der Abstand zwischen den zwei Punkten eines jeden Grundpunktmusters,
- er beträgt 70 % des Abstandes der virtuellen Mittelpunkte von zwei benachbart nebeneinander oder übereinander angeordneten Teilflächen.

9. Verfahren nach einem der Ansprüche 1 bis 8, **dadurch gekennzeichnet, dass** eine oder mehrere Teilflächen benutzt werden, um darin eine Fehlererkennung oder eine Fehlerkorrektur ermöglichende Daten zu speichern.

10. Verfahren nach einem der Ansprüche 1 bis 9, **dadurch gekennzeichnet, dass** zum Drucken ein Digitaldruckverfahren verwendet wird.

11. Verfahren nach Anspruch 10, **dadurch gekennzeichnet, dass** das Digitaldruckverfahren mindestens eins der folgenden Verfahren umfasst:
ein Tintenstrahlverfahren, ein Thermosublimationsverfahren, ein Thermotransferverfahren oder ein Laserdruckverfahren.

12. Verfahren zum Auslesen von unter Verwendung eines Verfahrens nach einem der Ansprüche 1 bis 11 gespeicherten Daten, wobei
- ein Bild von wenigstens einem Teil des das Punktmuster enthaltenden Bereichs des bedruckten Mediums aufgenommen wird,
- aus dem Bild die Lage von wenigstens einem Teil der darin enthaltenen Punkte ermittelt wird,
- für jede Teilfläche eines Punktmuster-Blocks zur Bestimmung der Daten ein Winkelbestimmungsverfahren und / oder ein Längenbestimmungsverfahren verwendet wird,
- wobei bei dem Winkelbestimmungsverfahren
- der Winkel der virtuellen Verbindungslinie zwischen dem in der jeweiligen Teilfläche vorhandenen Punktepaar in Bezug auf eine virtuelle Bezugslinie, oder
- der Winkel der virtuellen Verbindungslinie zwischen dem virtuellen Mittelpunkt der jeweiligen Teilfläche und einem der beiden Punkte, die in der jeweiligen Teilfläche enthalten sein müssten, in Bezug auf die virtuelle Bezugslinie
- ermittelt wird, und
- abhängig vom Winkelbereich, innerhalb dessen der ermittelte Winkel liegt, die durch das in der betreffenden Teilfläche enthaltene Punktmuster repräsentierten Daten bestimmt werden, und
- wobei bei dem Längenbestimmungsverfahren der Abstand der Punkte des Punktepaars ermittelt wird und
- abhängig vom Abstandsbereich, innerhalb dessen der ermittelte Abstand liegt, die durch das in der betreffenden Teilfläche enthaltene Punktmuster repräsentierten Daten bestimmt werden.

13. Verfahren nach Anspruch 12, **dadurch gekennzeichnet, dass** die Aufnahme des Bildes durch eine Punktmuster-Lesevorrichtung erfolgt, dass der Bereich des bedruckten Mediums, von welchem durch die Punktmuster-Lesevorrichtung ein Bild aufgenommen wird, durch eine in der Punktmuster-Lesevorrichtung vorgesehene Lichtquelle beleuchtet wird, dass die Wellenlänge oder der Wellenlängenbereich des von der Lichtquelle abgegebenen Lichts so gewählt wird und dass entweder in dem Bereich des bedruckten Mediums, von welchem durch die Punktmuster-Lesevorrichtung ein Bild aufgenommen wird, nur die Punkte des zu erfassenden Punktmusters das von der Lichtquelle abgegebene Licht reflektieren, oder dass in dem Bereich des bedruckten Mediums, von welchem durch die Punktmuster-Lesevorrichtung ein Bild aufgenommen wird, nur die Punkte des zu erfassenden Punktmusters das von der Lichtquelle abgegebene Licht nicht reflektieren.

14. Verfahren nach Anspruch 13, **dadurch gekennzeichnet, dass** das Bild von dem das Punktmuster enthaltenden Bereich des bedruckten Mediums durch eine in der Punktmuster-Lesevorrichtung vorgesehene Kamera aufgenommen wird und dass die verwendete Kamera aus einer ausschließlich für von den Punkten des Punktmusters reflektiertes Licht empfindlichen Kamera, einer ausschließlich für nicht von den Punkten des Punktmusters reflektiertes Licht empfindlichen Kamera, einer infrarotlichtempfindlichen Kamera, einer für Licht mit einer im Bereich von 900 - 980 nm liegenden Wellenlänge empfindlichen Kamera, eine für UV-Licht empfindlichen Kamera, einer für sichtbares Licht empfindlichen Kamera und einer für einen bestimmten Teil des sichtbaren Lichts empfindlichen Kamera ausgewählt wird.

15. Verfahren nach Anspruch 14, **dadurch gekennzeichnet, dass** die virtuelle Verbindungslinie zwischen den beiden anderen Punkten des Referenzpunktmusters als die Bezugslinie verwendet wird.

## Claims

1. A method of storing data in which the data to be stored are printed on the surface of a printable medium using a printing device in the form of a dot pattern including a multiplicity of dots,
- wherein the dot pattern includes at least one dot pattern block occupying a given area on the printable medium, and
- wherein the area which the at least one dot pattern block occupies on the medium to be printed upon includes a multiplicity of mutually juxtaposed and/or mutually superposed area portions of equal size in each of which a dot pattern representing a part of the data to be stored is respectively printed,
**characterised in that**
- each area portion contains only one of a plurality of different basic dot patterns,
- each of the plurality of basic dot patterns comprises two dots which are arranged in point-symmetrical relationship with respect to a virtual reference point within the respective area portion, and
- the basic dot patterns have at least one of the following properties:
- they differ in respect of the angle of the virtual connecting line between the two dots of the respective basic dot pattern in relation to a virtual reference line and/or
- they involve a different dot spacing.

2. A method according to claim 1 **characterised in that** the dot pattern is printed using an ink which absorbs infrared light, in particular infrared light of a wavelength in the range of 900 nm to 980 nm.

3. A method according to claim 1 or claim 2 **characterised in that** the plurality of different basic dot patterns are selected from one of the groups:
including at least three different basic dot patterns, including up to eight different basic dot patterns or including four different basic dot patterns.

4. A method according to one of claims 1 to 3 **characterised in that** the plurality of different basic dot patterns differ only in respect of the angle of the virtual connecting line between the two dots of the respective basic dot pattern in relation to a virtual reference line.

5. A method according to one of claims 1 to 4 **characterised in that** the mutual spacings between the two dots of each basic dot pattern are of equal size in respect of all basic dot patterns.

6. A method according to one of claims 1 to 5 **characterised in that** the virtual reference point is the virtual centre point of the area portion containing the respective basic dot pattern.

7. A method according to one of claims 1 to 6 **characterised in that** the reference dot pattern comprises three dots, wherein one of the dots is in the centre of the area portion containing the reference dot pattern and the other two dots are disposed in mutually juxtaposed relationship in the region therebeneath of the area portion, and wherein the unprinted virtual connecting line between the two lower dots of the reference dot pattern extends horizontally.

8. A method according to claim 7 **characterised in that** the spacing between the two lower dots of the reference dot pattern is so selected that it fulfils at least one of the following conditions:
- it is greater than the spacing between the two dots of each basic dot pattern,
- it is 70% of the spacing of the virtual centre points of two adjacently mutually juxtaposed or superposed area portions.

9. A method according to one of claims 1 to 8 **characterised in that** one or more area portions are used to store therein data permitting an error identification or error correction.

10. A method according to one of claims 1 to 9 **characterised in that** a digital printing process is used for the printing operation.

11. A method according to claim 10 **characterised in that** the digital printing process includes at least one of the following processes: an ink jet process, a thermosublimation process, a thermotransfer process or a laser printing process.

12. A method of reading out data stored using a method according to one of claims 1 to 11, wherein
- an image of at least a portion of the region of the printed medium, that contains the dot pattern, is recorded,
- from the image there is ascertained the position of at least a portion of the dots contained therein,
- an angle determining method and/or a length determining method is used for each area portion of a dot pattern block for determining the data,
- wherein in the angle determining method
- the angle of the virtual connecting line between the pair of dots present in the respective area portion in relation to a virtual reference line, or
- the angle of the virtual connecting line between the virtual centre point of the respective area portion and one of the two points which would have to be contained in the respective area portion in relation to the virtual reference line
- is ascertained, and
- in dependence on the angle range within which the ascertained angle is disposed the data represented by the dot pattern contained in the area portion in question are determined, and
- wherein in the length determining method the spacing of the dots of the pair of dots is ascertained, and
- in dependence on the spacing range within which the ascertained spacing lies the data represented by the dot pattern contained in the area portion in question are determined.

13. A method according to claim 12 **characterised in that** recording of the image is effected by a dot pattern reading device, the region of the printed medium of which an image is recorded by the dot pattern reading device is illuminated by a light source provided in the dot pattern reading device, the wavelength or the wavelength range of the light produced by the light source is so selected that either in the region of the printed medium of which an image is recorded by the dot pattern reading device only the dots of the dot pattern to be detected reflect the light produced by the light source or in the region of the printed medium of which an image is recorded by the dot pattern reading device only the dots of the dot pattern to be detected do not reflect the light produced by the light source.

14. A method according to claim 13 **characterised in that** the image of the region of the printed medium, that contains the dot pattern, is recorded by a camera provided in the dot pattern reading device and the camera used is selected from a camera sensitive exclusively to light reflected by the dots of the dot pattern, a camera sensitive exclusively to light not reflected by the dots of the dot pattern, an infrared light-sensitive camera, a camera sensitive to light of a wavelength in the range of 900 - 980 nm, a camera sensitive to UV light, a camera sensitive to visible light, and a camera sensitive to a given portion of visible light.

15. A method according to claim 14 **characterised in that** the virtual connecting line between the other two dots of the reference dot pattern is used as the reference line.

## Revendications

1. Procédé pour mettre en mémoire des données, selon lequel, en utilisant un dispositif d'impression, les données à mémoriser sont sous la forme d'un modèle à points comprenant une pluralité de points, imprimé à la surface d'un support imprimable, étant précisé que :
- le modèle à points comprend au moins un bloc de modèle à points qui occupe une surface définie du support imprimable,
- la surface qu'occupe sur le support à imprimer au moins un bloc de modèle à points, contient une pluralité de surfaces élémentaires de même grandeur disposées côte à côte et/ou au-dessus les unes des autres, et dans chacune d'elles est imprimé un modèle à points représentant une partie des données à mémoriser,
ce procédé étant **caractérisé en ce que**
- chaque surface élémentaire contient seulement un modèle parmi plusieurs modèles à points de base différents,
- chacun des modèles à points de base est constitué de deux points qui par rapport à un point virtuel de référence sont disposés symétriquement dans cette surface élémentaire,
- les modèles à points de base présentent au moins une des propriétés suivantes:
ils se distinguent par l'angle que la ligne virtuelle reliant les deux points fait avec une ligne virtuelle de référence et/ou ils présentent un espacement différent entre les points.

2. Procédé selon la revendication 1, **caractérisé en ce que** le modèle à points est imprimé en utilisant une couleur qui absorbe la lumière infrarouge, notamment celle dont la longueur d'onde se situe dans la plage de 900 à 980 nm.

3. Procédé selon la revendication 1 ou 2, **caractérisé en ce que** les différents modèles à points de base sont sélectionnés à partir d'un des groupes suivants:
comprenant au moins trois modèles à points de base différents, comprenant de trois à huit modèles à points de base différents, ou comprenant de quatre à huit modèles à points de base différents.

4. Procédé selon une des revendications 1 à 3, **caractérisé en ce que** les différents modèles à points de base se distinguent seulement en ce qui concerne l'angle que la ligne virtuelle reliant les deux points du modèle concerné fait avec une ligne virtuelle de référence.

5. Procédé selon une des revendications 1 à 4, **caractérisé en ce que** les espacements des deux points de chaque modèle à points de base sont les mêmes pour tous les modèles.

6. Procédé selon une des revendications 1 à 5, **caractérisé en ce que** le point de référence virtuelle est le point virtuel de référence de la surface élémentaire contenant le modèle à points de base concerné.

7. Procédé selon une des revendications 1 à 6, **caractérisé en ce que** le modèle à points de référence est composé de trois points dont l'un est au milieu de la surface élémentaire contenant le modèle à points de référence, les deux autres points se trouvent l'un à côté de l'autre dans la zone, située en dessous, de la surface élémentaire, et la ligne virtuelle non imprimée qui relie les deux points inférieurs du modèle à points de référence présente un tracé horizontal.

8. Procédé selon la revendication 7, **caractérisé en ce que** la distance séparant les deux points inférieurs du modèle à points de référence est choisie de manière à satisfaire au moins une des conditions suivantes :
- être supérieure à la distance séparant les deux points de chaque modèle à points de base,
- atteindre 70 % de la distance séparant les points médians virtuels de deux surfaces élémentaires disposées côte à côte ou l'une au-dessus de l'autre.

9. Procédé selon une des revendications 1 à 8, **caractérisé en ce qu'**une ou plusieurs surfaces élémentaires sont utilisées pour y mettre en mémoire des données permettant de reconnaître ou de corriger une erreur.

10. Procédé selon une des revendications 1 à 9, **caractérisé en ce qu'**un procédé numérique d'impression est utilisé pour réaliser l'impression.

11. Procédé selon la revendication 10, **caractérisé en ce que** le procédé numérique d'impression comprend au moins un des procédés suivants, à savoir un procédé à jet d'encre, un procédé à thermosublimation, un procédé à transfert thermique ou un procédé d'impression laser.

12. Procédé pour lire des données qui ont été mémorisées en utilisant un procédé selon une des revendications 1 à 11, selon lequel :
- il est effectué un cliché d'au moins une partie de la zone du support imprimé où se trouve le modèle à points,
- à partir du cliché est déterminée la position d'au moins une partie des points qu'il contient,
- pour chaque surface élémentaire d'un bloc de modèle à points, on utilise un procédé de détermination d'angle et/ou un procédé de détermination de longueur pour déterminer les données,
- dans le procédé de détermination d'angle, sont établis:
l'angle qui fait avec la ligne virtuelle de référence, la ligne virtuelle reliant les deux points présents dans chaque surface élémentaire,
l'angle qui fait avec la ligne virtuelle de référence, la ligne virtuelle reliant le point virtuel médian de chaque surface élémentaire à un des deux points qui devraient se trouver dans cette surface, et
. en fonction de la plage angulaire dans laquelle se trouve l'angle établi, les données représentées par le modèle à points contenu dans la surface élémentaire concernée, sont déterminées, et
dans le procédé de détermination de longueur, la distance entre les points de la paire de points est établie, et
. en fonction de la plage de longueur dans laquelle se trouve la distance établie, les données représentées par le modèle à points contenu dans la surface élémentaire concernée sont déterminées.

13. Procédé selon la revendication 12, **caractérisé en ce que** :
- la prise de cliché est effectuée par un dispositif de lecture de modèle à points,
- la zone du support imprimé, dont un cliché est pris par le dispositif de lecture du modèle à points est éclairée par une source lumineuse prévue dans ce dispositif,
- la longueur d'onde ou la plage de longueur d'onde de la lumière émise par la source lumineuse est choisie et alors, dans la zone du support imprimé dont a été pris un cliché par le dispositif de lecture du modèle à points, soit seuls les points du modèle à points à saisir réfléchissent la lumière émise par la source lumineuse, soit seuls ces points ne la réfléchissent pas.

14. Procédé selon la revendication 13, **caractérisé en ce que** le cliché de la zone du support imprimé dans laquelle se trouve le modèle à points est pris par un appareil photographique prévu dans le dispositif de lecture de modèle à points,
- l'appareil photographique utilisé est au choix un appareil sensible exclusivement à la lumière réfléchie par les points du modèle à points, un appareil sensible exclusivement à la lumière qui n'est pas réfléchie par les points du modèle à points, un appareil sensible à la lumière infrarouge, un appareil sensible à une lumière dont la longueur d'onde se situe dans la plage de 900 à 980 nm, un appareil sensible à la lumière ultraviolette, un appareil sensible à la lumière visible ou un appareil sensible à une partie définie de la lumière visible.

15. Procédé selon la revendication 14, **caractérisé en ce que** la ligne virtuelle reliant les deux autres points du modèle à points de référence est utilisée comme ligne de référence.
